Europäisches Patentamt

European Patent Office

Office européen des brevets

(11) Publication number : **0 470 870 A1**

(12) # EUROPEAN PATENT APPLICATION

(21) Application number : **91307416.7**

(22) Date of filing : **12.08.91**

(51) Int. Cl.[5] : **A23L 1/236,** A23L 1/0522,
A23L 1/0524, A23L 1/0532,
A23L 1/054, A23L 1/056,
A23L 1/0526, A23L 1/0528

(30) Priority : **10.08.90 US 565346**

(43) Date of publication of application :
**12.02.92 Bulletin 92/07**

(84) Designated Contracting States :
**AT BE CH DE DK ES FR GB GR IT LI LU NL SE**

(71) Applicant : **Alko Ltd.**
**P.O. Box 350**
**SF-00101 Helsinki (FI)**

(72) Inventor : **Rha, Chokyun**
**285 Commonwealth Avenue**
**Boston, MA 02118 (US)**
Inventor : **Timonen, Maritta**
**Kantelettarentie 8E 57**
**SF-00420 Helsinki (FI)**
Inventor : **Vaara, Rimo**
**It. Puistot. 16 L 14**
**SF-00140 Helsinki (FI)**
Inventor : **Lahtinen, Tarja**
**Laajaniityntie 12 E 63**
**SF-01620 Vantaa (FI)**

(74) Representative : **Collier, Jeremy Austin Grey et al**
**J.A.Kemp & Co., 14 South Square, Gray's Inn**
**London WC1R 5LX (GB)**

(54) **Low molecular weight polysaccharide derivatives useful as food ingredients.**

(57) A mixture of polymers derived from degradation of a polysaccharide derivative is used as new low calorie food ingredient and also to replace at least a portion of a conventional high calorie ingredient in a foodstuff recipe, the fat substitute being fat-free and having fat-like properties such that the eating quality of the new food products or the high calorie ingredient-replaced foodstuff is desirable or substantially maintained.

EP 0 470 870 A1

EP 0 470 870 A1

This invention relates to the production and use of a new food ingredient which is fat-free having fat-like properties. In particular the fat-like properties of the new ingredient imparts an acceptable eating quality to conventional food recipes, such that it can be used as a component in making food or can be used to replace, in part or full, the ordinary fat or carbohydrate content in various food products. The invention also further relates to methods for producing food products, which contain such a new ingredient and which may be used as a fat or carbohydrate substitute.

## BACKGROUND OF THE INVENTION

Numerous studies throughout the world have shown a link between a fatty diet high in cholesterol, and heart diseases. Also, because of its high energy content (about 9 kcalories/g) high fat consumption may cause obesity and its associated problems. It is recommended (by e.g. The American Heart Association) that fat consumption should be reduce so that no more than 30% of caloric energy is derived from fat. It has also been recommended that an increased proportion of calorie intake should be obtained from complex carbohydrates rather than fat. Fat in the diet should thus be partially omitted or substituted. However, fat endows desirable eating qualities (e.g. taste, mouthfeel, aroma, consistency) and consumers are used to and enjoy the properties that fat lends to food. So substitution of fat with a non-fat substance that is fat-free but has fatty consistency and mouthfeel would be an attractive approach to this problem.

Cellulose derivatives such as carboxymethylcellulose, methylcellulose, hydroxypropylmethylcellulose and hydroxypropylcellulose are non-caloric (non-metabolizable by humans or intestinal flora in human beings), odorless, tasteless water-soluble polymers derived from cellulose. They dissolve rapidly in cold and hot water and are physiologically inert.

The production of different types of starch derivatives has been described, e.g. in Radley, J.A. Starch And Its Derivatives, 4 ed. [p. 382] 1968 and in Rutenberg et al., Starch: Chemistry and Technology, 2ed., pp. 311-88 (1984). Derivatives such as oxidized starches, cross-linked starches, starch ethers and cationic starches are discussed in the foregoing. One or more of the inventors herein have also shown the production and use of higher molecular weight polysaccharides, including starch and cellulose derivatives, in a variety of different applications in U.S. Patent Nos. 4,810,646; 4,851,393; 4,749,620; 4,744,933; 4,739,693; 4,732,205; 4,119,783: 4,666,492 and have also demonstrated the production and use of degraded cellulose derivatives as food ingredients in co-pending U.S. Patent Application Nos. 309,387: 370,629 and 464,291 from which this application derives priority as to common subject matter expressly and inherently disclosed therein.

Carboxymethyl starch (CM starch) is an ether the starch derivative typically prepared by the reaction of chloroacetic acid on starch in the presence of alkali. The sodium salt of CM starch, which occurs also under the name sodium starch glycolate, is used as a disintegrant in pharmaceutical tablets. Other proposed or actual usages are, e.g. components of absorbents, adhesives, medical poultices, thickening agents, stabilizers, papermaking, coating and pulp refining. CM amylose has been suggested to be used to lower the blood sugar level or as blood volume expander. It has been used as a substrate when studying the kinetics of amylases. CM starch is insoluble in cold water, but it has high water absorption properties such that CM starch particles swell to several times their original volume.

Maltodextrin, enzymatically hydrolysed starches, are commercially available. However, these products are less suitable as fat subsstitutes in many types of fat containing foods, especially when a high proportion of fat is replaced.

There are also some new developments in the area of low-calorie fat mimetics that have been recently approved or are awaiting regulatory approval. They have been made, e.g. by modifying natural proteins physically or by modifying sucrose chemically. However, many of these compounds suffer from severe dietary and functional shortcomings.

## SUMMARY OF THE INVENTION

Therefore, it is an object of the present invention to provide a new functional food ingredient which can be produced by partial degradation of conventional polysaccharide dérivatives which is useful by itself as a new food ingredient and as a fat or carbohydrate substitute having fat-like properties for use in food products.

The invention discloses the use and manufacture of novel water soluble or water suspendable mixtures of relatively low molecular weight polymers obtained by degrading or hydrolysing or fractionating polysaccharide derivatives, and most preferably degraded starch derivatives.

In accordance with the invention there is provided a water soluble or water suspendable mixture of polymers derived from a polysaccharide derivative. The mixture of polymers can be used in a foodstuff composition. The mixture has an average degree of polymerization in the range of 3 to 500, usually 3 to 300, preferably 5 to 100 and more preferably 5 to 50, as determined, in the case of starch derivatives, by the reducing end group measurement as described for example in Somogyi, M., J. Biol. Chem., Vol. 195, pp. 19-33 (1952), the disclosure of which is incorporated herein by reference. The most preferred polysaccharide derivative comprises a starch derivative.

The polysaccharide derivative may be degraded by enzymatic, chemical or physical or mechanical means. In embodiments where an enzyme preparation is utilized to perform the degradation, the enzyme preparation is typically selected from the group of polysaccharide degrading enzymes specific to the particular polysaccharide. In the case of starch derivatives, enzymes such as amylases or pullanases and mixtures thereof are suitable.

In embodiments where degradation of a polysaccharide derivative is to be effected by chemical or physical means, chemical hydrolysis, chemical oxidation, heat or sonic treatment are preferred mechanisms for achieving the desired polymeric mixtures according to the invention.

By conventional means a polysaccharide derivative or an initially degraded polysaccharide derivative mixture may be further separated into fractions of polymers of differing average chain lengths. The viscosity of the various fractions will vary with the degree of average chain length of the polymers contained within in a fraction. Depending on the particular foodstuff application, the invention further contemplates selecting one or more fractions from an initial polymeric mixture having a viscosity (average chain length) which is most appropriate for the particular foodstuff application. The selection of a particular average chain length fraction and the amount of such a fraction to be used in by given foodstuff application may vary according to the amount of fat or carbohydrate to be replaced, it being recognized that the higher the absolute amount of substitution agent desired to be used in a particular foodstuff, the lower the viscosity (average molecular weight) of the fraction of mixture of polymers which should be used.

The invention further contemplates removing all or a portion of the fat content contained in the composition of a foodstuff and substituting therefor a mixture of polymers produced according to the invention for the removed fat such as saturated triglyceride of fatty acid, phospholipids and cholesterol containing materials such as butter, oil, and mayonnaise. The mixture of polymers produced according to the invention could also be used to replace all or a portion of the carbohydrate content contained in a foodstuff. Typical carbohydrates which might be replaced are starch, dextrin, sucrose, glucose, maltose or fructose containing foodstuffs such as corn or wheat flour, corn meal, syrup, molasses and the like. Oils and lipids which are normally found in foods such as unsaturated triglycerides, phospholipids and lecithin may also be replaced by the new ingredient of the invention.

The invention therefore provides for a method of preparing a low calorie food product comprising replacing at least part of the high calorie components of a foodstuff with a mixture of polymers having an average degree of polymerization in the range of 3 to 500 derived from degradation of a polysaccharide derivative. Preferably, the new low calorie food ingredient can substitute for at least about 10% of the normal fat or carbohydrate content of a conventional food recipe.

The invention also provides for cake and icing compositions comprising a sweetener, water, fat, and other ingredients, which fat ingredient has some portion thereof substituted with a mixture of polymers derived from a degraded polysaccharide derivative, the mixture having an average degree of polymerization of about 3 to 500.

The invention also provides for cake and icing compositions comprising a sweetener, fat and other ingredients in which the low calorie food ingredient is used as a component of the composition.

## DETAILED DESCRIPTION OF THE INVENTION

This invention describes a new functional food ingredient which can be produced by partial degradation of polysaccharide derivatives. The term "functional" refers to a food ingredient which imparts some property to the food or produces some effect. The term "polysaccharide" refers to a polymeric carbohydrate having a plurality of repeating units comprised of simple sugars. The degradation product is comprised of a mixture of relatively low molecular weight polymers. The term "polymeric" or "polymer" is meant to include both polymeric units and oligmeric units of the polysaccharide derivatives of the invention. Polymeric units or polymers comprise between about 4 and about 10 repeating units.

CM starch can be hydrolyzed enzymatically to produce CM starch hydrolysates. According to this invention, the suspensions or gels prepared from these hydrolysates have fat-like properties and are similar to fat in mouthfeel and in handling properties. CM starch is easily hydrolyzed with commercial amylases, and even mild hydrolysis may produce preparations suitable for use as fat replacers. CM starch can be made from various sources of starch including wheat, rice, tapioca corn and potato starch. Potato starch, a typical starting material, contains about 20% amylose (DP of about 3,000) and about 80% amylopectin (DP of about 2,000,000). This molecular composition is particularly suitable as a fat replacer. Other typical suitable starch may be corn starch, wheat starch and other major grain starch. The derivatives of this invention include hydroxypropyl, methylethyl and hydroxyethyl starches.

The term "derivative" is meant to define polysaccharides according to this invention that are substituted. Preferably the polysaccharide derivative starting material has a degree of substitution of between about 0.1 to about 3.0. "Degree of substitution" refers to the number of derivative groups (e.g. carboxymethyl, hydroxypropyl) per monomer units in the polysaccharide backbone (branched or straight chain). A degree of substitution of 0.2 would mean, for example, that there is about one derivative substituent per every 5 monomer units in the polysaccharide polymer. A degree of substitution of three (3) would mean there are three derivative substituents per every monomer unit in a polysaccharide chain.

The derivative substituents are typically bonded to a starch glucose monomer unit at the 2, 3 and 6 positions. Most typically a starch starting material comprises between about 1% to 85% amylose and about 15% to 99% amylopectin.

Other polysaccharide derivatives having a polymer backbone including one or more sugar monomers such as glucose, galactose, arabinose, mannose, fructose, rahmnose, and xylose are suitable starting materials. Such polymer backbones may be branched or straight. Examples of such polysaccharides are starch, cellulose, pullulan, pustular, laminarin, scleroglucan, carragenan, alginate, guar gum, gum arabic, inulin, pectin, whelan, rhamsan, gellan, xanthan, zooglan, methylan, chitin, cyclodextrin and chitosan. Typical derivative substituents which are substituted onto such polysaccharides are one or more of sulfate, carboxylic acid (carragenan, alginate, pectin), carboxylic acid ester, pyruvic acid, pyruvate (pectin, xanthan gum, zooglan, methylan), carboxymethyl, hydroxypropyl, methyl, methylethyl, hydroxyethyl, hydroxyethylmethyl and the like.

As described more fully herein, such polysaccharide derivatives may be degraded to polymeric mixtures of average DP between 5 and 500 by enzymatic, chemical physical, or mechanical agents/means. The polymeric mixtures are generally referred to as a "hydrolyzate". The term "degraded" refers to the procedure whereby polysaccaride derivatives are broken down into smaller polymeric units. Exemplary enzymes for use in degrading certain of the above described polysaccharide derivatives are pectinases, lyases, xanthanases, chitinases, lysozymes and laminarases.

Exemplary enzymes which are suitable for degrading polysaccharide derivatives are various food grade cellulases. They can be produced from a multitude of different microorganisms much as strains of Trichoderma, Aspergillus, Penicillium, etc. A selected microorganism strain is grown by conventional means in a medium containing food grade materials such that the cellulases are produced, the microorganism is separated from the medium, the medium is collected and typically concentrated and dried. These enzymes can be used as such or in mixtures and they can be modified in many different ways known to the man skilled in the art. A most preferred enzyme preparation is produced from Trichoderma reesei, from which preparations the beta-glucosidase and/or the cellobiohydrolase activities are removed chromatographically or genetically. Beta-glucosidase and/or cellobiohydrolase activities are preferably removed from the selected cellulase preparation so as to prevent the degradation of the cellulose derivative into mono- and disaccharides. Genetic alteration of the appropriate enzyme producing microorganism may be effected with radiation or mutagenic chemical agents (or by gene inactivation by recombinant DNA methods) so as to disenable production of beta-glucosidase and cellobiohydrolase by the microorganism. Cellulase preparations suitable for use herein are, e.g. the commercially available cellulase preparations designated as the Econase® series as produced by Alko Ltd., Helsinki, Finland.

This invention relates more specifically to a water soluble or suspendable mixture of polymers derived from a polysaccharide derivative using, for instance, such enzymes. The polymeric mixtures are characterized by having an average degree of polymerization (DP) in the range of 3-500. A range of about 5 to abouyt 100 is preferred.

Following is a description of some exemplary embodiments of the invention where a degradation treatment is carried out using enzymatic, chemical, physical or mechanical agents/methods.

In one embodiment of the invention a polysaccharide derivative may be hydrolyzed by treating the starch derivative with a solution of acid. Typical acid treatment solutions might contain acids such as sulphuric acid, hydrochloric acid, phosphoric acid, or mixtures of the foregoing. The concentration of the acid in the treatment solution and the treatment time and temperature may vary depending on the degree of degradation of the polysaccharide derivative which is desired. In any event where an acid hydrolysis treatment is utilized, the acid concentration and the treatment time and temperature is selected to produce a mixture of polymers having an average DP of between 5-500, and which most preferably contains less than about 25% by weight of mono- and disaccharides.

In another embodiment of the invention a selected polysaccharide derivative may be degraded by oxidation with such agents as chlorine, oxygen or hydrogen peroxide. Such oxidative treatments and reaction conditions are well known in the art. It may also be possible to use physical methods like heat or mechanical shear treatment, or sonication when cleaving the chain backbone of polysaccharide derivatives.

Whatever conventional chemical (hydrolytic, oxidative or otherwise) or physical treatments are employed, the conditions and the degree of treatment are selected such that the polymeric mixture resulting from the initial treatment has an average DP of between 3 and 500, and contains less than about 25%, preferably less than 10%, by weight of mono- and disaccharides.

Enzyme Treatment For Starch Derivatives

Ezymes which may be used in some embodiments of this invention, e.g. with respect to starch derivatives, are various food-grade amylolytic enzyme preparations. They can be produced from a multitude of different microorganisms such as strains of Bacillus, Klebsiella, Clostridium, Aspergillus, Rhizopus. Typical commercially available enzyme preparations suitable for use herein are amylolytic preparations (such as alpha and beta amylases), pullulanases, and cyclodextrin glycosyltransferases (CGTase).

Starting Materials

A most preferred polysaccharide derivative for use herein is carboxymethyl starch. The invention is not limited to the use of this polysaccharide derivative, but others, such as hydroxypropyl, methylethyl, hydroxyethyl and other typically lipophilic functional group substituted starches may be more suitable for a specific application.

General Preparation of a Typical Starch Derivative Hydrolysate

In one embodiment of the invention, starch derivative hydrolyzates may be prepared from starch derivatives as defined above by an enzymatic hydrolysis utilizing an amylolytic preparation having $\alpha$-amylase as the main active hydrolytic agent such that the only insignificant amounts of mono- and disaccharides are produced. The hydrolysis procedure is generally carried out by dissolving the starch derivative in water, adjusting the pH and the temperature to the value suitable for the enzyme activity, adding the enzyme to the solution and allowing the enzyme to react for a suitable time. After the reaction, the enzyme is inactivated by heating the solution up to about 100°C and the hydrolysate product is concentrated and dried. The average degree of polymerization (DF) of the polymers formed by such a hydrolysis may be less than 500. The specific conditions suitable for and the specific time sufficient to secure the desirable hydrolysis may be readily determined for each selected starch derivative and each selected enzyme preparation.

Similarly in other embodiments of the invention where degradation is carried out using chemical or physical means, the average DP of the polymers is less than 500. Most preferably in such embodiments, the treatment conditions are selected such that the resulting polymeric mixtures contain less than about 25% by weight of mono- and disaccharides.

Use of Oligomeric Mixtures Derived from Starch Derivatives

The degraded starch derivative products of the invention dissolve or suspend rapidly in water and are physiologically inert.

The calorie content of carbohydrates in general is 4 kcal/g, which as such is less than the caloric content of fats (9 kcal/g). Carboxymethyl starch is an ether type starch, and it has been suggested that ether linkages with respect to the derivative in starch are not hydrolysable (Food Technology Review, No. 52, 1979, p. 113). Thus the calorie content of CM starch and its hydrolysates may be even less than 4 kcal/g. According to U.S. Patent 3,505,110, another ether type starch, namely hydroxypropylated starch was hydrolyzed to a syrup that was found to be amylase resistant. Thus the caloric value of the product was very low, and it was suggested to be used as a substitute for ordinary sugars. Similarly, the calorie content of various polysaccharides with various functional groups such as carboxymethyl starch are believed to be very low and certainly less than the original polysaccharide or its degraded forms.

The polymeric mixtures and fractions thereof produced according to this invention can be used, for example, as new low calorie fat sparing agents. These mixtures can be used to replace the normal fat or carbohydrate content in various foodstuffs. These mixtures can be used to replace fat in various foodstuffs, like baked goods, butter, butter icing and spreads. All of and at least a substantial portion of fat or carbohydrate can be replaced by these mixtures. The precise amount which can be replaced depends on the application. The texture of the foodstuff and the eating quality of the new product can thus be improved or remain unchanged.

For example, a foodstuff composition can be prepared comprising fat in combination with one or more of the following ingredients, sweeteners (such as sugar or saccharin), art-recognized flours (such as wheat and corn flour), emulsifiers (i.e., agents capable of emulsifying the food composition), raising agents (e.g., yeasts), thickeners, and acidifiers. At least some portion of the fat ingredient, preferably at least about 10%, can be replaced with a mixture of polymers derived from the polysaccharide derivatives, described herein. Furthermore, the entire fat component of the foodstuff can be replaced with a mixture of these polymers.

For example, a cake composition can be prepared comprising a sweetener, flour, a raising agent, egg ingredient, water and a fat ingredient. At least a portion of or, optionally, the entire fat ingredient can be substituted by a mixture of polymers derived from a degraded polysaccharide derivative, described herein, in which the mixture has an average degree of polymerization of about 3 to 500. Preferably, at least about 10% of the fat ingredient is replaced.

An icing composition can be similarly prepared by combining a sweetener, water and a fat ingredient. At least a portion of the fat ingredient, or the entire fat ingredient, can be replaced with the mixture of polymers described herein.

By conventional means an initially degraded polysaccharide derivative mixture may be further separated into fractions of polymers of differing average chain lengths, i.e. differing average DP. The viscosity of the various fractions will vary with the degree of average chain length of the polymers contained within a fraction. Depending on the particular foodstuff application, one or more fractions from an initially degraded polymeric mixture can be selected having a viscosity (average chain length) which is most appropriate for the particular foodstuff application. The viscosity average molecular weights can easily be determined by a variety of methods. Fractions of hydrolyzate solutions of different viscosity (i.e. molecular weight) can be separated from the original mixture by standard art-recognized separation techniques, e.g. chromatography.

The language "conforms to a rod-like configuration" is intended to include the situation wherein the oligomer is in a substantially straight configuration and not in a coiled configuration. Polymers have distinct solution properties and conform to a rod-like conformation below a certain molecular weight.

The Mark-Houwink equation may be used to study the chain conformation of a polymer. The Mark-Houwink equation is as follows: $[n] = KM^a$ wherein the Mark-Houwink exponent, a, is indicative of the conformation of the polymer chain in solution. The conformation of the polymer chain in solution may be classified as an 1) impermeable dense sphere, 2) random coil, e.g. semi-permeable or free draining, and 3) rodlet or rod-like. Mark-Houwink exponents of 0.002 to about 0.5 correspond to dense spheres, exponents of about 0.5 to about 0.8 correspond to semi-permeable random coils, exponents of 0.8 to about 1.2 correspond to free draining random coils and exponents of about 1.2 to about 2 correspond to rodlets or rod-like oligomers or polymers.

In an embodiment of this invention, the degradation product of the polysaccharide derivative comprises a mixture of oligomers of the polysaccharide having a Mark-Houwink exponent of at least 1.5 at an NaCl concentration of about 0.005N to about 0.5N. This NaCl concentration range is typically used when measuring Mark-Houwink exponents. The salt content of foodstuffs may also typically fall into this range.

Furthermore, the most preferred oligomeric mixtures according to the invention have a relatively narrow range of molecular weights, i.e. relatively monodispersed, having a polydispersity index ($M_w/M_n$, weight average molecular weight divided by number average molecular weight) of less than about 2.0 and typically less than about 1.8. The oligomers in a most preferred mixture of oligomers extend over a relatively narrow range of $M_w$ and, even as to mixtures having an average molecular weight at or near the upper limit of $M_w$ where the oligomers may begin to assume a random coil configuration, are comprised of a significant portion, preferably a majority, of oligomers having a rod-like configuration.

The following examples 1-4 set forth typical exemplary routines for preparing a starch and various starch derivatives hydrolysates therefrom.

Example 1: Starch Derivative Enzymatic Hydrolysis

60 g of carboxymethyl starch (CM starch) derived from potato starch (Primojel; Avebe, 9607 PT Foxhol, The Netherlands) was mixed in 1200 ml of water. The temperature of the mixture was raised to 80°C and the suspension was mixed continuously. 1.5 ml of amylase (Ban 120L, Novo, Industri A/S, Novo Alle, 2880 Bagsvaerd, Denmark) dilution 1/50 by volume was added to the suspension mixture. After hydrolysis of about 30 minutes the enzyme was inactivated by heating (100°C, 10 min.). The hydrolysate was then freeze-dried.

The hydrolysate contained negligible amounts of glucose, maltose and oligosaccharides, as the value of reducing sugars was 0.28%. The viscosity of a 5% by weight suspension of the hydrolysate (measured using Haake-Rotovisco RV 12 viscometer with sensor systems NV; Karlsruhe, Federal Republic of Germany) at 25°C was 57 mPa.s (using the shear rate of 692 l/s). The viscosity of the unhydrolysed raw CM starch material was 106 mPa.s (25°C, 692 l/s). Since the viscosity of the hydrolysates is much lower, the hydrolysates can be used at much higher concentration than the original high molecular weight starch derivatives.

Use of Degraded Polysaccharide Derivative

The degraded polysaccharide derivatives according to the invention are a new food ingredient in and of themselves and are not necessarily limited to use in conventional food recipes as fat or carbohydrate substitutes although in practical applications such a new low calorie food ingredient is preferably used as a substitute for all or a portion, most preferably at least about 10%, of the normal fat or carbohydrate content of a conventional food recipe.

Example 2 -- Preparation of butter icing using CM starch hydrolysate

A butter icing was prepared with the carboxymethyl starch (CM starch) hydrolysate of Example 1 to replace 33% of the normal fat content of a conventional butter icing recipe. The butter icing contained the following ingredients:

| | | |
|---|---|---|
| Butter (Fat) | 120 g | 24% |
| CM starch hydrolysate (15% by weight suspension in water) | 59 g | 12% |
| Icing sugar | 225 g | 45% |
| Water | 96 g | 19% |

The CM starch hydrolysate was added to the soft butter, while whisking with electric hand whisk. After that the icing sugar was added. Finally water was added slowly and whisking was continued until the emulsion was light and even.

The resultant butter icing had a good, even texture and a pleasant mouthfeel.

In the recipe above, the butter (fat) content would normally be about 180 g.

Example 3 -- Preparation of butter icing using CM starch

A butter icing was prepared with non-degraded high molecular weight carboxymethyl starch (CM starch) to replace 33% of the normal fat content. The butter icing contained the following ingredients:

| | | |
|---|---|---|
| Butter | 120 g | 24% |
| CM starch (5% by weight suspension in water) | 59 g | 12% |
| Icing sugar | 225 g | 45% |
| Water | 96 g | 19% |

The high molecular weight CM starch suspension was added to the soft butter, while whisking with electric hand whisk. After that the icing sugar was added. Finally water was added slowly while still whisking.

No emulsion was formed, but water and oil were immediately separated resulting in an unsuitable food product. When a 10% suspension of non-degraded CM starch was used instead of 5% suspension, the same result was obtained.

Example 4 -- Preparation of butter icing using maltodextrin

A commercial maltodextrin was used to replace 33% of the normal fat content in butter icing. This maltodextrin is manufactured by enzymatic hydrolysis of potato starch and has been recommended to be used as a fat replacer, e.g. in mayonnaises, salad dressings, spreads and fillings. The butter icing contained the following ingredients:

| | | |
|---|---|---|
| Butter | 120 g | 24% |
| Maltodextrin (25% by weight suspension in water) | 59 g | 12% |
| Icing sugar | 225 g | 45% |
| Water | 96 g | 19% |

The maltodextrin suspension was added to the soft butter, while whisking with electric hand whisk. The icing sugar was subsequently added. Finally the water was added slowly while still whisking.

The resultant icing curdled and was very unstable.

Example 5 -- Preparation of Madeira cake using CM starch hydrolyzate

The CM starch hydrolysate of Example 1 was used to replace 40% of the normal fat content in a Madeira cake recipe containing the following ingredients:

| | | |
|---|---|---|
| Cake Flour | 100 g | 21 % |
| Sugar - caster | 125 g | 26 % |
| Butter | 39 g | 8 % |
| CM starch hydrolysate (15% by weight suspension) | 26 g | 5 % |
| Skimmed milk powder | 8 g | 2 % |
| Baking Powder | 6 g | 1 % |
| Salt | 1.5 g | 0.3 % |
| Water | 90 g | 19 % |
| Egg | 88 g | 18 % |

The normal butter content in the above recipe is 65 g. The dry ingredients were mixed in a bowl. The water, fat and the CM starch hydrolysate were added. Using an electric hand whisk, the mixture was mixed on speed 1 (lowest speed) for 30 seconds and on speed 3 (highest speed) for 30 seconds. The egg was then added over 30 seconds on speed 1 and mixing was continued on speed 2 for 135 seconds. Batter was poured into greased tins and baked at 170°C for about 35 minutes.

The modified cake was evaluated and compared with a full fat Madeira cake. The standard cake had slightly more coarse crumb than the modified cake, with 40% fat replaced by CM starch hydrolysate. Both cakes were found to have a pleasant appearance, taste and mouthfeel.

Example 6 -- Partial replacement of normal fat content in butter

The CM starch hydrolysate the production of which is described in Example 1 was used to replace 33% of the normal fat content in a conventional butter by mixing 10 g of conventional butter with 5 g of CM starch hydrolysate (15% by weight suspension in water). A good shiny and stable emulsion was formed similar to butter.

Degradations of other polysaccharide derivatives as described above can be carried out with appropriate enzymes, chemical hydrolysis techniques or physical means to produce low calorie, edible polymeric mixtures having fat-like or carbohydrate-like eating qualities.

Although degraded starch derivatives are most preferred, other degraded polysaccharide derivatives having branched or straight chain backbones comprising one or more of the monomer units glucose, galactose, arabinose, mannose, fructose, rhamnose, xylose and other sugar monomers are suitable.

## Claims

1. A foodstuff composition comprising a mixture of oligomers derived from degradation of a polysaccharide derivative, a majority of the said oligomers having a molecular weight such that the oligomer has a rod-like configuration.

2. A foodstuff composition comprising a mixture of oligomers derived from degradation of a polysaccharide derivative, other than a cellulose derivative, the said mixture of oligomers having an average degree of polymerization in the range of 3-500.

3. A foodstuff composition according to claim 1 or 2 wherein the polysaccharide derivative includes one or more carboxymethyl, hydroxyethylmethyl, methyl, hydroxypropyl, methylethyl, hydroxyethyl, hydroxypropylmethyl, sulfate, carboxylic acid, carboxylic acid ester and/or pyruvate substituents.

4. A foodstuff composition according to claim 1, 2 or 3, wherein the polysaccharide derivative contains 0.1 to 3 substituents per saccharide unit.

5. A foodstuff composition according to any one of claims 1 to 4, wherein the polysaccharide derivative is a starch derivative, carrageenan, pullulan, pustulan, alginate, laminarin, guar gum, gum arabic, inulin, pectin, whelan, rhamsan, gellan, xanthan, zooglan, methylan, chitin, cyclodextrin or chitosan.

6. A foodstuff derivative according to any one of claims 1 to 4 wherein the polysaccharide derivative is a derivative of a polysaccharide consisting substantially only of glucose units.

7. A foodstuff composition according to any one of claims 1 to 6 wherein the mixture of oligomers has an average degree of polymerization in the range of 5-100.

8. A foodstuff composition according to claim 7 wherein the mixture of oligomers has an average degree of polymerization in the range of 5 to 50 and the oligomers have a rod-like configuration.

9. A foodstuff composition according to any of claims 1 to 8 wherein the mixture of oligomers has a polydispersity less than 2 and contains less than about 25% by weight of mono- and di-saccharides.

10. A foodstuff composition according to any one of claims 1 to 9 wherein the mixture of oligomers has an average molecular weight of less than 15,000 daltons, preferably less than 10,000 daltons.

11. A foodstuff composition according to any one of claims 1 to 10 wherein the mixture of oligomers is substituted for at least a portion of a high calorie ingredient of the foodstuff composition.

12. A foodstuff composition according to claim 11 wherein the high calorie ingredient is a fat or a carbohydrate, and, when the said ingredient is a carbohydrate, the mixture of oligomers is not digestible.

13. A foodstuff composition according to claim 11 or 12 wherein at least about 10 percent up to 100 percent of the high calorie ingredient is removed from the food composition and replaced by the mixture of oligomers.

14. A foodstuff composition according to any one of claims 1 to 13 comprising a fat ingredient, water and one or more additional ingredients selected from sweeteners, flours, emulsifiers, raising agents, thickeners, acidifiers and stabilizers.

15. A foodstuff composition according to any of claims 1 to 13 in the form of a cake composition comprising:
    (a) a fat ingredient;
    (b) a sweetener;
    (c) a flour;
    (d) a raising agent;
    (e) egg ingredient; and
    (f) water.

16. A foodstuff composition according to any one of claims 1 to 13 in the form of an icing composition comprising:
    (a) a fat ingredient;
    (b) a sweetener; and
    (c) water.

17. A method for preparing a reduced calorie food product comprising replacing at least a portion of a high calorie ingredient of a high calorie foodstuff composition with a mixture of oligomers derived from degradation of a polysaccharide derivative other than a cellulose derivative, the mixture of oligomers having an average degree of polymerization in the range of 3 to 500.

18. A method for preparing a reduced calorie food product comprising replacing at least a portion of a high calorie ingredient of a high calorie foodstuff composition with a mixture of oligomers derived from degradation of a polysaccharide derivative, a majority of the maid oligomers having a molecular weight such that the oligomer has a rod-like configuration.

19. A method according to claim 17 or 18 wherein the high calorie ingredient is a fat or a carbohydrate, and, when the said ingredient is a carbohydrate, the mixture of polymers is not digestible.

20. A method according to claim 17, 18 or 19, wherein the polysaccharide derivative is a starch derivative, carrageenan, pullulan, pustulan, alginate, laminarin, guar gum, gum arabic, inulin, pectin, whelan, rhamsan, gellan, xanthan, zooglan, methylan, chitin, cyclodextrin or chitosan.

21. A method according to any one of claims 17 to 20 wherein the polysaccharide derivative is a derivative of a polysaccharide consisting substantially only of glucose units.

22. A method according to any one of claims 17 to 21 wherein the polysaccharide derivative includes one or more carboxymethyl, methyl, hydroxyethylmethyl, hydroxypropyl, methylethyl, hydroxyethyl, hydroxypropylmethyl, sulfate, carboxylic acid, carboxylic acid ester and/or pyruvate substituents.

23. A method according to any one of claims 17 to 22 wherein the polysaccharide derivative contains 0.1 to 3 substituents per saccharide unit.

24. A method according to any one of claims 17 to 23 wherein the mixture of oligomers has an average degree of polymerization in the range of 5 to 50 and the polymers have a rod-like chain configuration.

25. A method according to any one of claims 17 to 24 wherein the mixture of oligomers has a polydispersity less than 2 and contains less than about 25% by weight of mono- and di-saccharides.

26. A method according to any one of claims 17 to 25 wherein the mixture of oligomers has an average molecular weight of less than 15,000 daltons, preferably less than 10,000 daltons.

27. A method according to any one of claims 17 to 26 wherein at least about 10% up to 100% of the high calorie ingredient is replaced.

28. A mixture of oligomers derived from degradation of a polysaccharide derivative, other than a cellulose derivative, a majority of the said oligomers having a molecular weight such that the oligomer has a rod-like configuration and/or an average degree of polymerization in the range 3-500.

EP 0 470 870 A1

**European Patent Office**

# EUROPEAN SEARCH REPORT

Application Number

EP    91 30 7416

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-B-2324470 ( ROQUETTE FRERES) <br> * the whole document * <br> --- | 1-28 | A23L1/236 <br> A23L1/0522 <br> A23L1/0524 |
| X <br> D | DE-A-1668552 (PENICK & FORD LTD.) <br> * page 3, lines 10 - 20; claims 1-14 * <br> & US-A-3505110 <br> --- | 1-28 | A23L1/0532 <br> A23L1/054 <br> A23L1/056 <br> A23L1/0526 |
| X | CH-A-594053 (AKADEMIE DER WISSENSCHAFTEN DER DDR) <br> * column 2, lines 20 - 41 * <br> * column 4, line 63 - column 5, line 17 * <br> * columns 9 - 12 * <br> --- | 1-28 | A23L1/0528 |
| X | EP-A-231729 (ROLF RAGNAR BERGKVIST ET AL.) <br> * page 2, line 30 - page 3, line 15 * <br><br> * page 3, line 30 - page 4, line 3 * <br> --- | 1-2, <br> 5-21, <br> 24-28 | |
| X | FR-A-2167986 (HAYASHIBARA BIOCHEMICAL LABORATORIES INC.) <br> * page 4, line 29 - page 7, line 7 * <br><br> --- | 1-2, <br> 5-7, <br> 10-21, <br> 26-28 | **TECHNICAL FIELDS SEARCHED (Int. Cl.5 )** |
| X | EP-A-149258 (NATIONAL STARCH AND CHEMICAL CORPORATION) <br> * page 4, lines 6 - 21 * <br><br> * page 5, lines 9 - 26 * <br> * page 14, lines 5 - 20 * <br> ----- | 1-2, <br> 5-6, <br> 10-21, <br> 26-28 | A23L <br> C08B |

The present search report has been drawn up for all claims

| Place of search | Date of completion of the search | Examiner |
|---|---|---|
| BERLIN | 09 OCTOBER 1991 | ALVAREZ ALVAREZ C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)

11